# EUROPEAN PATENT SPECIFICATION

(11) **EP 2 745 962 B1**
(45) Date of publication and mention of the grant of the patent: **10.02.2021**
(21) Application number: 13197294.5
(22) Date of filing: 13.12.2013
(51) Int. Cl.: B23B 5/36

(54) **Method for machining metallic member using lathing and scraping**
Verfahren zur Bearbeitung eines metallischen Bauteils durch Drehen und Schaben
Procédé d'usinage d'un élément métallique à l'aide de tournage et de raclage

(30) Priority: 19.12.2012 CN 201210553795; 19.12.2012 CN 201210554320
(43) Date of publication of application: 25.06.2014
(73) Proprietor: Fuxiang Precision Industrial (Kunshan) Co., Ltd., Yushan Town, Kunshan City Jiangsu (CN)
(72) Inventor: Yang, Ming-Lu, New Taipei (TW); Zhang, Tian-En, JIASHAN (CN); Zhang, Wei-Chuan, JIASHAN (CN); Jia, Jian-Shi, JIASHAN (CN); Peng, Yang-Mao, JIASHAN (CN); Qu, Jian, JIASHAN (CN); Chen, Feng-Hua, JIASHAN (CN); Xu, Zhen-Guang, JIASHAN (CN); Sui, Jing-Shuang, JIASHAN (CN); Zhuang, Da-Qing, JIASHAN (CN); Li, Jie, JIASHAN (CN); Liu, Yi, JIASHAN (CN); Yu, Jian-Min, JIASHAN (CN)
(74) Representative: CMS Cameron McKenna Nabarro Olswang LLP

(56) References cited:
- EP-A1- 1 952 937
- DE-A1-102009 058 649
- DE-A1-102011 105 402
- US-A1- 2002 002 420

## Description

### BackGround

### Field

The present disclosure relates to a method for machining a metallic member using lathing and scraping. A method for machining a metallic member using lathing and milling is known from EP 1 952 937 A1.

### BackGround

An electronic device such as a tabletop computer or a mobile phone may have a housing made of metal. The metallic housing includes a top portion and a peripheral sidewall extending from a peripheral edge of the top portion. The top portion has a greater surface area than that of the peripheral sidewall and has a non-circular flat surface or non-circular curved surface. The peripheral sidewall has four side surfaces arranged in order and adjacent two side surfaces connected by corners. In related manufacturing fields, if a milling process is employed to machine the metallic housing, some tracks occur on the top portion that has been a milled because of intermittent contact and interrupted milling by the milling cutter. Then a milling process needs to be applied for a better appearance, thus the efficiency of the milling process is reduced. If a lathe process is adopted to machine the metallic member, it is difficult to machine a surface which is not circular. The lathe is not suitable to machine the peripheral sidewalls because of the four corners of the peripheral sidewall. Thus a number of additional machining processes must be added to machine the metallic housing.

Therefore, there is room for improvement within the art.

### Summary

A machining method for machining a metallic member using lathing and scraping, includes: (1) providing a machine comprising a machine support, a worktable, a moving device, a lathe feeding mechanism, and a scraping feeding mechanism, wherein the worktable is positioned on the machine support; the moving device is slidably assembled to the machine support along a first direction and located above the worktable, the lathe feeding mechanism and the scraping feeding mechanism are slidably assembled to the moving device along a second direction perpendicular to the first direction, the lathe feeding mechanism comprises at least one feeding assembly and a lathe tool connected to the at least one feeding assembly, the at least one feeding assembly is configured for driving the lathe tool to move along a third direction substantially perpendicular to the first and second direction reciprocally, the scraping feeding mechanism comprises a scraping cutter and is configured for driving the scraping cutter to move along the third direction; (2) positioning a metallic member on the worktable, the metallic member comprising a top portion and a peripheral sidewall extending from a peripheral edge of the top portion, the peripheral sidewall comprising an end edge away from the top portion; (3) moving the lathe tool by the moving device to resist the top portion of the metallic member; (4) applying the worktable to rotate with the metallic member along a first axis along an axis parallel to the third direction; (5) controlling the lathe tool to move backwards and forwards toward the metallic member to machine the top portion of the metallic member circumferentially; (6) moving the lathe tool by the moving device along a predetermined path relative to the worktable to machine curved surfaces of the top portion of the metallic member; (7) holding the metallic member to stop rotate, and moving the lathe tool away from the metallic member; (8) driving the scraping cutter by the moving device to contact the peripheral sidewall of the metallic member; and (9) moving the scraping cutter along a predetermined path to scrap the peripheral sidewall of the metallic member, simultaneously controlling a feed of the scraping cutter relative to the metallic member.

### BRIEF DESCRIPTION OF THE DRAWING

The components in the drawings are not necessarily drawn to scale, the emphasis instead placed upon clearly illustrating the principles of the present disclosure. Moreover, in the drawings, like reference numerals designate corresponding parts throughout the several views.
FIG. 1 is an isometric view of a first embodiment of a machine equipped with a lathe feeding mechanism and a scraping feeding mechanism, and a worktable.
FIG. 2 is an exploded, isometric view of the machine of FIG. 1.
FIG. 3 is a partial, exploded, isometric view of the lathe feeding mechanism and the scraping feeding mechanism of FIG. 2.
FIG. 4 is an exploded, isometric view of the lathe feeding mechanism of FIG. 3.
FIG. 5 is an isometric view of a metallic member to be machined.
FIG. 6 is a sectional view of the metallic member of FIG. 5, taken along line VI-VI of FIG. 5.
FIG. 7 is a flow chart of a first embodiment of the method for machining the metallic member.
FIG. 8 is a schematic view of a second embodiment of the machine with a part thereof removed.

### DETAILED DESCRIPTION

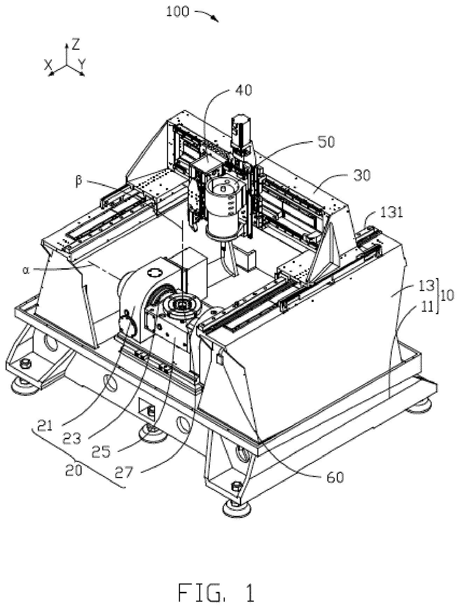

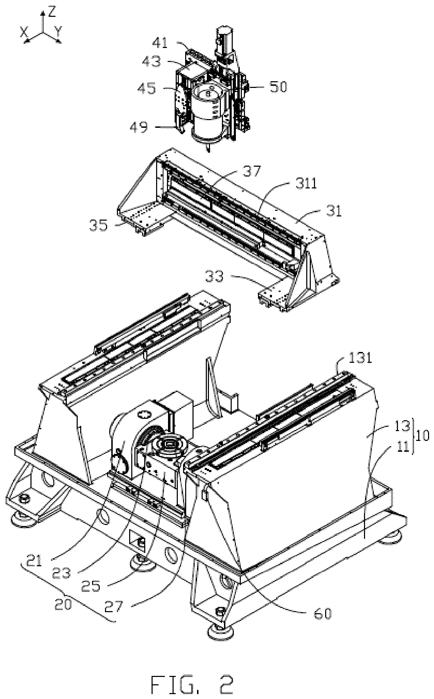

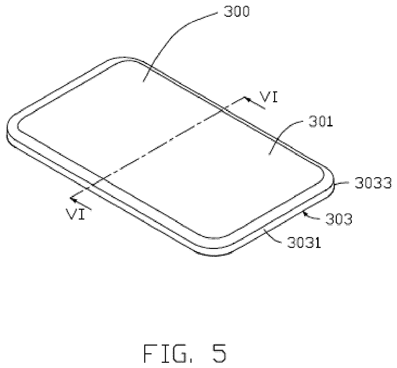

FIGS. 1 and 2 show a first embodiment of a machine 100 adopting a scraping method for machining a metallic member 300 (see FIG. 5). The machine 100 includes a machine support 10, a worktable 20, a moving device 30, a lathe feeding mechanism 40, a scraping feeding mechanism 50, and a controller 60. The worktable 20 holds a workpiece in place and is supported by the machine support 10. The moving device 30 is movably positioned on the machine support 10 above the worktable 20. The lathe feeding mechanism 40 and the scraping feeding mechanism 50 are arranged side by side and slidably mounted on the moving device 30. The controller 60 is electrically connected to the worktable 20, the moving device 30, the lathe feeding mechanism 40, and the scraping feeding mechanism 50 for controlling the machine 100. Under the control of the controller 60, the moving device 30 can be driven to move with the lathe feeding mechanism 40 and the scraping feeding mechanism 50, such that the lathe feeding mechanism 40 and the scraping feeding mechanism 50 can be driven three-dimensionally along Cartesian coordinates, that is, along the X, the Y, and the Z axes.

The machine support 10 includes a base 11 and a pair of support bodies 13 positioned on the base 11. The pair of support bodies 13 is parallel to each other and arranged apart from each other. Each support body 13 includes a first sliding rail 131 on a surface away from the base 11. In the illustrated embodiment, the first sliding rail 131 extends substantially parallel to the X-axis (a first direction).

The worktable 20 is rotatably positioned on the base 11 between the two support bodies 13. The worktable 20 includes a pair of mounting bases 21, a first rotating member 23, a rotating shaft 25, and a second rotating member 27. The pair of mounting bases 21 is located in the middle portion of the base 11, in parallel. The pair of mounting bases 21 is located between the two support bodies 13. The first rotating member 23 is mounted on one mounting base 21. The rotating shaft 25 interconnects the first rotating member 23 and the other one mounting base 21. The first rotating member 23 is capable of rotating the rotating shaft 25 around an α axis. The α axis is parallel to the Y-axis but is not co-linear (a second direction). The second rotating member 27 is positioned on a middle portion of the rotating shaft 25, and capable of rotating the metallic member 300 placed thereupon around an β axis. The β axis is parallel to the Z-axis (a third direction) but is not co-linear. The first rotating member 23 and the second rotating member 27 are electrically connected to the controller 60. In the illustrated embodiment, the first rotating member 23 and the second rotating member 27 are direct drive motors.

The moving device 30 is slidably mounted on the pair of support bodies 13 and located above the worktable 20. The moving device 30 includes a cross beam 31, a pair of sliding bases 33, a pair of first driving mechanisms 35, and a second driving mechanism 37. The extending direction of the cross beam 31 is substantially parallel to the Y-axis. Opposite ends of the cross beam 31 are slidably positioned on the support bodies 13. The cross beam 31 includes a pair of second sliding rails 311 positioned on a side surface and extending substantially parallel to the Y-axis. The pair of sliding bases 33 is installed on the opposite ends of the cross beam 31 to slidably connect with the first sliding rail 131. The first driving mechanism 35 is mounted on a surface of the sliding base 33 away from the cross beam 31 and located adjacent to an end of the first sliding rail 131. The pair of first driving mechanisms 35 is employed to drive the cross beam 31 to move along the X-axis direction.

The second driving mechanism 37 is mounted on the cross beam 31 to drive the lathe feeding mechanism 40 and the scraping feeding mechanism 50 to move along the second sliding rails 311. The first driving mechanisms 35 and the second driving mechanism 37 are electrically connected to the controller 60. In the illustrated embodiment, the first driving mechanisms 35 and the second driving mechanism 37 are linear motors with wonderful performance. In other embodiments, the first driving mechanisms 35 and the second driving mechanism 37 may be other drivers, such as hydraulic cylinders or rams. The number of the first driving mechanisms 35, and the second driving mechanism 37 may be set according to the application.

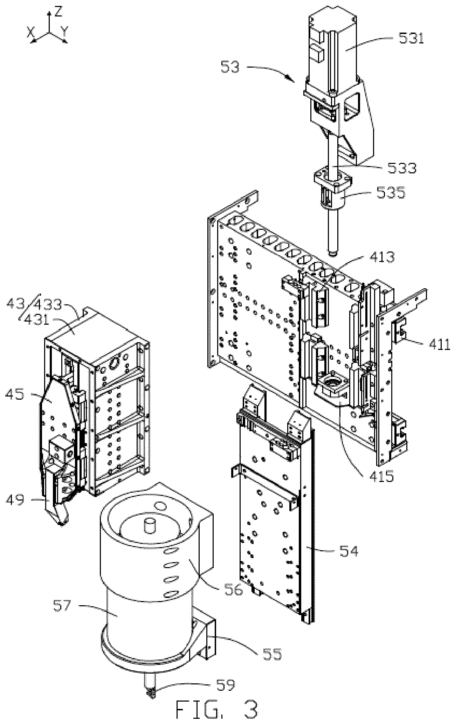

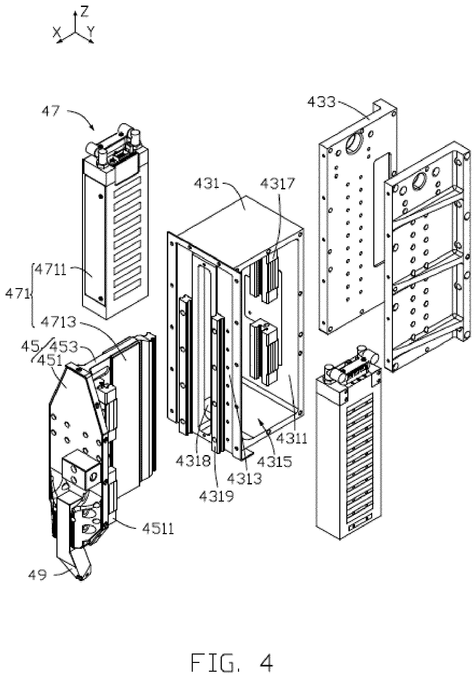

FIGS. 3 to 4 show that the lathe feeding mechanism 40 is slidably positioned on the cross beams 31. The lathe feeding mechanism 40 includes a sliding saddle 41 (see FIG. 2), a mounting seat 43, a tool holder 45, a pair of feeding assemblies 47, and a lathe tool 49. The sliding saddle 41 is assembled to the cross beams 31 and movably engages with the pair of second sliding rails 311. The sliding saddle 41 is driven by the second driving mechanism 37 to slide along the Y-axis direction together with the lathe feeding mechanism 40 and the scraping feeding mechanism 50. The mounting seat 43 is fitted to the sliding saddle 41 away from the cross beam 31 and equipped with four guiding rails 413 extending along the Z-axis direction. The four guiding rails 413 are divided in two sets spaced from each other in pairs. The sliding saddle 41 further includes a mounting block 415 adjacent to the base 11. The mounting block 415 is located between the two sets of guiding rails 413. The mounting seat 43 is assembled to the sliding saddle 41 and spaced from the four guiding rails 413.

The mounting seat 43 includes a frame 431 and two mounting boards 433 assembled to opposite sides of the frame 431. The frame 431 includes a first side wall 4311 and a second side wall 4313. The first side wall 4311 and the second side wall 4313 are positioned substantially parallel to each other and cooperatively define a receiving space 4315. The first side wall 4311 is slidably connected with the sliding saddle 41. Two separate guiding portions 4317 protrude from an inner surface of the first side wall 4311 facing toward the second side wall 4313 and extending substantially parallel to the Z-axis. A through groove 4318 is defined in the second side wall 4313 and extends along a direction substantially parallel to the Z-axis corresponding to the guiding portions 4317. Two sliding portions 4319 protrude from an outer surface of the second side wall 4313 at two sides of the through groove 4318. In the illustrated embodiment, the sliding portions 4319 are sliding rails, and the frame 431 is integrally formed. The two mounting boards 433 are installed on opening sides of the frame 431. Each mounting board 433 is connected substantially perpendicularly to the first wall 4311 and the second side wall 4313 to close the two opening sides of the frame 431.

The tool holder 45 slidably connects with the mounting seat 43. The tool holder 45 is substantially "T" shaped, and includes a main body 451 and a sliding board 453 protruding substantially perpendicularly from the main body 451. The main body 451 is a bar of material tapering at both ends, and positioned outside of the mounting seat 43. Two distanced holding portions 4511 are positioned on a surface of the main body 451 facing the sliding board 453. The two holding portions 4511 slidably engage with the pair of sliding portions 4319 of the mounting seat 43. The sliding board 453 passes through the through groove 4318 and is slidably assembled to the two guiding portions 4317, dividing the receiving space 4315 into two parts.

The pair of feeding assemblies 47 is mounted in the mounting seat 43, and includes two drivers 471 electrically connected to the controller 60. The two drivers 471 are capable of driving the tool holder 45 into reciprocating motion at high speed along the direction of the Z-axis, relative to the guiding portions 4317 and the sliding portions 4319. The two drivers 471 are received in the receiving space 4315 and positioned on two sides of the sliding board 453. In the illustrated embodiment, the drivers 471 are linear motors. Each driver 471 includes a forcer 4711 and a stator 4713. Each forcer 4711 is fixed to a surface of each of the mounting boards 433. The sliding board 453 is positioned between the two forcers 4711. The two stators 4713 are positioned on the opposite surfaces of the sliding board 453. In other embodiments, the number of drivers 471 may be set according to application. For example, the two drivers 471 can replace a more powerful single driver, or three or more drivers can be positioned to drive the tool holder 45 to maximize the available power, and the assembly of the drivers is simpler.

The lathe tool 49 is fixedly assembled to the main body 451 of the tool holder 4511 adjacent to the base 11.

The scraping feeding mechanism 50 includes a linear driving assembly 53, a linking board 54, a fixing seat 55, a mounting base 56, a rotatable driving member 57 and a scraping cutter 59. The linear driving assembly 53 includes a driving member 531, a screw leading rod 533, and a nut 535. The driving member 531 is mounted on the sliding saddle 43 above the cross beam 31. The screw leading rod 533 interconnects the driving member 531 and the mounting block 415. The nut 535 is sleeved on the screw leading rod 533 and engages with the screw leading rod 533. The linking board 54 is slidably assembled to the two sets of guiding rails 413 and fixed to the nut 535. The fixing seat 55 is mounted on an end of the linking board 54 adjacent to the base 11. The mounting base 56 is mounted on an end of the linking board 54 opposite to the fixing seat 55. The rotatable driving member 57 extends through the fixing seat 55 and the mounting base 56, and is fittingly supported by the fixing seat 55. The scraping cutter 59 is mounted on an end of the rotatable driving member 57 adjacent to the base 11.

The driving member 531 is capable of rotating the screw leading rod 533 and drives the linking board 54, the rotatable driving member 57, and the scraping cutter 59 to slide along Z-axis direction. The rotatable driving member 57 is capable of rotating the scraping cutter 59. The scraping cutter 59 is driven by the cross beam 31 to move along the X-axis direction or the Y-axis direction, and driven by the linear driving assembly 53 to move along Z-axis direction.

In assembly, the worktable 20 is positioned between the two support bodies 13. The cross beam 31 is installed on the two support bodies 13 via the pair of sliding bases 33. The pair of first driving mechanisms 35, and the second driving mechanism 37 are mounted on the base 11 and the cross beam 31 respectively. The lathe feeding mechanism 40 and the scraping feeding mechanism 50 are mounted to the cross beam 31 side by side. The worktable 20, the moving device 30, the lathe feeding mechanism 40, and the scraping feeding mechanism 50 are electrically connected to the controller 60.

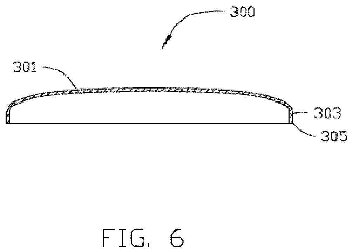

FIGS. 5 and 6 shows that the metallic member 300 to be machined is a housing of a tablet computer or a mobile phone. The metallic member 300 is substantially rectangular and hollow, and includes a top portion 301 and a peripheral sidewall 303 extending from a peripheral edge of the top portion 301. The top portion 301 has a curved surface with a relatively greater surface area than that of the peripheral sidewall 303. In the embodiment, the peripheral sidewall 303 has four side surfaces 3031 arranged in order and every two of the adjacent side surfaces 3031 are connected by a corner 3033. The four side surfaces 3031 are substantially flat surfaces, each corner 3033 interconnects two adjacent side surfaces 3031. The peripheral sidewall 303 further includes an end edge 305 away from the top portion 301.

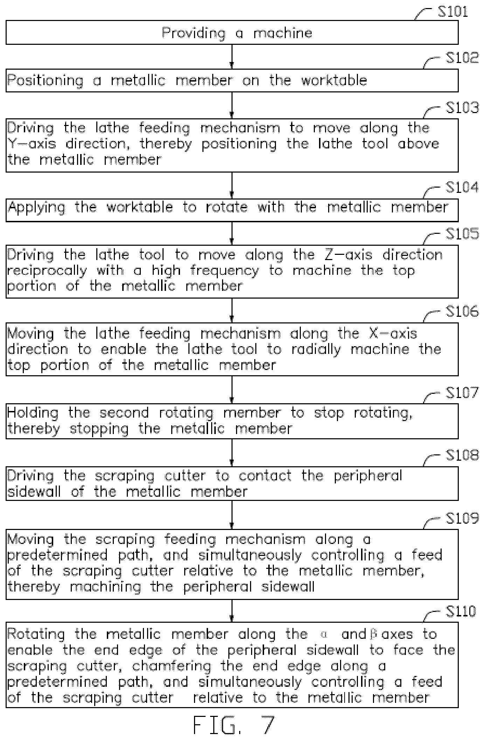

FIG. 7 shows that a method for machining the metallic member includes steps as follows:

In step S101: a machine 100 is provided, the machine 100 includes a worktable 20, a lathe feeding mechanism 40, and a scraping feeding mechanism 50, the lathe feeding mechanism 40 includes a lathe tool 49, and the scraping feeding mechanism 50 includes a scraping cutter 59. In the embodiment, the machine 100 is provided as previously described.

In step S102: a metallic member 300 is placed and held on the worktable 20 of the machine 100. The metallic member 300 includes a top portion 301 and a peripheral sidewall 303 extending from a peripheral edge of the top portion 301, the peripheral sidewall 303 includes an end edge 305 away from the top portion 301.

In step S103: the second driving mechanism 37 drives the lathe feeding mechanism 40 to move along the Y-axis, thereby positioning the lathe tool 49 at an original position above the metallic member 300.

In step S104: the second rotating member 27 rotates the metallic member 300 around the β axis;

In step S105: the lathe feeding mechanism 40 drives the lathe tool 49 to move along the Z-axis reciprocally with a high frequency to machine the top portion 301 of the metallic member 300 according to the depth of cutting required for each machining portion of the top portion 301, thereby machining the rotary metallic member 300 circumferentially.

In step S106: the moving device 30 moves the lathe feeding mechanism 40 along the X-axis to enable the lathe tool 49 to radially machine the top portion 301 of the metallic member 300 .

In step S107: the second rotating member 27 is held to stop rotating, and the metallic member 300 stops rotating, and the lathe tool 49 stops working.

In step S108: the scraping feeding mechanism 50 drives the scraping cutter 59 to contact the peripheral sidewall 303 of the metallic member 300. In detail, firstly, the pair of first driving mechanisms 35 drives the cross beam 31 to slide along the X-axis, and the second driving mechanism 37 drives the scraping feeding mechanism 50 to move along the Y-axis, such that the scraping cutter 59 moves toward one first sliding rail 131 and arrives at a position above an end of one side surface 3031 of the peripheral sidewall 303. Secondly, the linear driving assembly 53 drives the scraping cutter 59 to slide along the two sets of guiding rails 413 until the scraping cutter 59 meets the peripheral sidewall 303 of the metallic member 300.

In step S109: the scraping feeding mechanism 50 moves along a predetermined path, and simultaneously controls a feeding of the scraping cutter 59 relative to the metallic member 300, thereby machining the peripheral sidewall 303. In detail, the pair of first driving mechanisms 35 drives the cross beam 31 to slide along the X-axis to enable the scraping cutter 59 to scrap the one side surface 3031 of the peripheral sidewall 303. When the scraping cutter 59 arrives at the corner 3033, the scraping cutter 59 is driven by the pair of first driving mechanisms 35 and the second driving mechanism 37 to adjust a feeding direction of the scraping cutter 59. The rotatable driving member 57 rotates the scraping cutter 59 to enable the scraping cutter 59 to scrape the corner 3033 along a tangent line of the outer surface of the corner 3033. The second rotating member 27 rotates the metallic member 300 a certain angle, the moving device 30 drives the scraping feeding mechanism 50 to enable the scraping cutter 59 to scrape the next side surface 3031 along a straight line. In other embodiment, the second rotating member 27 continously rotates the metallic member 300 around the β axis, the scraping feeding mechanism 50 is moved by the moving device 30 to move along the metallic member 300 in a straight line, and simultaneously controlling a feed of the scraping cutter 59.

In step S110: the worktable 20 rotates the metallic member 300 to enable the end edge 305 of the peripheral sidewall 303 to face the scraping cutter 59, the scraping feeding mechanism 50 chamfers the end edge 305 along a predetermined path, and simultaneously controls a feeding of the scraping cutter 59 relative to the metallic member 300. In the embodiment, the step S110 includes the sub-steps as follows:
(1) the first rotating member 23 rotates the metallic member 300 along the α axis upward to enable the end edge 305 on one side surface 3031 parallel to the cross beam 31 to face the scraping cutter 59.
(2) the scraping feeding mechanism 50 chamfers the end edge 305 along the end edge 305, and simultaneously controls a movement of the scraping cutter 59 relative to the metallic member 300
(3) When the scraping cutter 59 comes to the corner 3033, the scraping cutter 59 is driven by the pair of first driving mechanisms 35 and the second driving mechanism 37 to adjust a movement direction of the scraping cutter 59. The rotatable driving member 57 rotates the scraping cutter 59 to enable the scraping cutter 59 to scrap the corner 3033 along a tangent line of the outer surface of the corner 3033.
(4) The scraping cutter 59 stops working and is moved by the moving device 30 away from the metallic member 300.
(5) The first rotating member 23 rotates the metallic member 300 along the α axis downward. The second rotating member 27 rotates the metallic member 300 along the β axis about 90 or 180 degrees to change position of the metallic member 300 relative to the scraping cutter 59, until the next side surface 3031 adjacent to the side surface 3031 which has the scraped end edge 305 is parallel to the cross beam 31.
(6) The first rotating member 23 rotates the metallic member 300 along the α axis upward to enable the end edge 305 on the next side surface 3031 to face the scraping cutter 59, the scraping cutter 59 is moved by the moving device 30 to resist the metallic member 300 and chamber the end edge 305.
(7) the scraping cutter 59 chamfering the end edges 305 on the side surfaces 3031 one by one, thereby accomplishing chamfering the metallic member 300.

When a multi-axis worktable 20 is provided, the scraping cutter 59 may chamfer the end edge 305 along a predetermined path with intermittent contact and interruption, such that the end edge 305 on the four side surfaces 3031 is chamfered at one time. That is, the worktable 20 is capable of rotating along multiple axis to enable the scraping cutter 59 to contact the end edge 305 all the times.

When only the peripheral sidewall 303 of the metallic member 300 needs to be machined, step 103 to step 107 may be omitted. The scraping feeding mechanism 50 chamfers the end edge 305 of the metallic member 300 first and then carries out scraping of the peripheral sidewall 303.

In step 110, the scraping cutter 59 is not limited to chamfering the end edge 305, it may be employed to machine other portions of the metallic member 300, a multi-axis worktable 20 may rotate the metallic member 300 along multiple axis such as the α axis, and the β axis to cooperate with the scraping cutter 59.

In other embodiments, the step 110 of chamfering the end edge 305 can be omitted in the method when the end edge 305 need not be chamfered.

The scraping feeding mechanism 50 may scrape the peripheral sidewall 303 and chamfers the end edge 305 of the metallic member 300 first, then the lathe feeding mechanism 40 drives the lathe tool 49 to machine the top portion 301 of the metallic member 300. In the scraping process, the scraping feeding mechanism 50 may just scrap the sidewall.

The sliding saddle 41, the mounting seat 43, the tool holder 45 may be omitted. Other driving assemblies assembled to the pair of second guiding rails 31 may substitute for the pair of feeding assemblies 47. The driving assembly is capable of directly reciprocating the lathe tool 49 along the Z direction at a high speed.

The scraping feeding mechanism 50 may not be assembled to the sliding saddle 41, but assembled to a sliding plate (not shown) slidably mounted on the pair of second guiding rails 311, such that the lathe feeding mechanism 40 and the scraping feeding mechanism 50 may be controlled independently.

The driving member 531, the screw leading rod 533, and the nut 535 may be substituted by other driving assemblies, such as a linear cylinder. The linear cylinder is assembled to the pair of second guiding rails 311. The rotatable driving member 57 is mounted on an output shaft of the linear cylinder. Accordingly, the linking board 54 of the scraping feeding mechanism 50 may be omitted.

The worktable 20 may include the second rotating member 27 only, the second rotating member 27 is assembled to the base 11, and rotates around the β axis only. The worktable 20 may be a multi-axis worktable, and rotates the metallic member 300 along a plurality of axis to enable a multi-workstations machining.

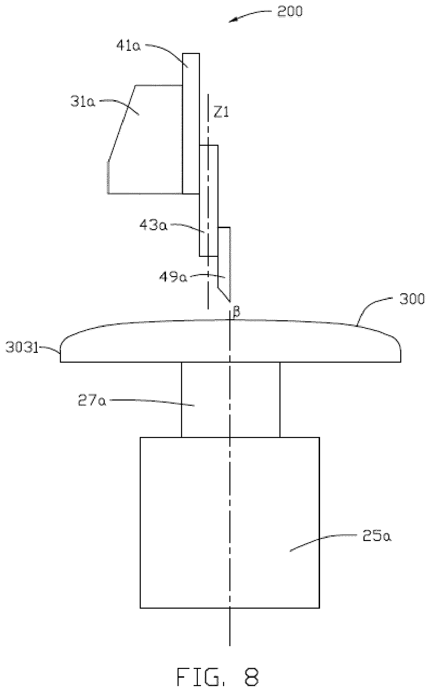

FIG. 8 shows a second embodiment of machine 200. In the second embodiment, the machine 20 is employed in a second method for machining the metallic member 300. The machine 200 is similar to the machine 100 in structure, save that a sliding saddle 41a is slidably assembled to a cross beam 31a, and a second rotating member 27a is mounted on a rotating shaft 25a. The metallic member 300 is placed and held on the second rotating member 27a. The difference between the machines 100/200 is that, a mounting seat 43a of the machine 200 is slidably mounted on the sliding saddle 41a and capable of sliding along the Z1-axis direction relative to the sliding saddle 41a, and a lathe tool 49 is slidably mounted on the mounting seat 43a.

When the lathe feeding mechanism 40 is to machine the top portion 301 of the metallic member 300, the pair of first driving mechanisms 35 drive the cross beam 31 to slide along the X-axis, and the second driving mechanism 37 drives the lathe feeding mechanism 40 to move along the Y-axis, such that the lathe tool 49 arrives at an original position above the worktable 20 for machining. The original position is located at a middle of a side of the top portion 301. Then the mounting seat 43a drives the lathe tool 49 to move downwardly along the Z1-axis to reach a preset position near the metallic member 300. Finally, the pair of feeding assemblies 47 drives the lathe tool 49 to move reciprocate at a high speed along the Z-axis according to the depth of cutting required for each machining portion of the top portion 301, to machine the rotary metallic member 300 circumferentially. Because the mounting seat 43a can slide along the Z1-aixs to place the lathe tool 49 at the preset position, a reciprocating distance of movement of the lathe tool 49 relative to the metallic member 300 can be reduced, thereby enhancing a reaction response of the lathe tool 49.

Accordingly, in the second embodiment of the method for machining the metallic member 300, after driving the cross beam 31 to slide along the Y-axis by the second driving mechanisms 37, a sub-step of moving the mounting seat 43a downward along the Z1-axis direction to reach a preset position is interposed.

The scraping feeding mechanism 50 scraps the peripheral sidewall 303 and chamfers the end edge 305 of the metallic member 300 before the lathe feeding mechanism 40 machines the top portion 301. The scraping feeding mechanism 50 is not assembled to the sliding saddle 41, but is assembled to a sliding plate (not shown) slidably mounted on the pair of second guiding rails 311, such that the lathe feeding mechanism 40 and the scraping feeding mechanism 50 may be controlled independently.

The moving device 30 is capable of moving the lathe feeding mechanism 40 along X/Y-axis directions, and the lathe feeding mechanism 40 is capable of driving the lathe tool 49 along the Z-axis direction reciprocating at a high speed. Such that a feed depth along the Z-axis direction on the metallic member 300 circumferentially is different, thereby a 3D curve surface is produced on the top portion 301. The scraping feeding mechanism 50 scraps the peripheral sidewall 303 and chamfers the end edge 305 after the top portion 301 is machined. The worktable 20 is capable of rotating the metallic member 300 to match the feed of the lathe feeding mechanism 40, and the lathe feeding mechanism 40 is capable of moving along the Y-axis direction, such that a uninterrupted machining is achieved. The finish of top portion 301 and the peripheral sidewall 303 of the metallic member 300 is enhanced, and the machining process saves time. The scraping cutter 59 chamfers the corner 3033 along the tangent line, such that a finish is enhanced. The worktable 20 is capable of rotating along the α axis and the β axis to facilitate the scraping cutter 59 to machine the metallic member 300, it is convenient.

While the present disclosure has been described with reference to particular embodiments, the description is illustrative of the disclosure and is not to be construed as limiting the disclosure. Therefore, various modifications can be made to the embodiments by those of ordinary skill in the art without departing from the scope of the disclosure, as defined by the appended claims.

## Claims

1. A machining method for machining metallic member (300) using lathing and scraping, comprising:
(1) providing a machine (100) comprising a machine support (10), a worktable (20), a moving device (30), a lathe feeding mechanism (40), and a scraping feeding mechanism (50), wherein the worktable (20) is positioned on the machine support (10); the moving device (30) is slidably assembled to the machine support (10) along a first direction and located above the worktable (20), the lathe feeding mechanism (40) and the scraping feeding mechanism (50) are slidably assembled to the moving device (30) along a second direction perpendicular to the first direction, the lathe feeding mechanism (40) comprises at least one feeding assembly (47) and a lathe tool (49) connected to the at least one feeding assembly (47), the at least one feeding assembly (47) is configured for driving the lathe tool (49) to move along a third direction substantially perpendicular to the first and second direction reciprocally, the scraping feeding mechanism (50) comprises a scraping cutter (59) and is configured for driving the scraping cutter (59) to move along the third direction, the worktable (20) comprising a first rotating member (23), a rotating shaft (25), and a second rotating member (27), the second rotating member (27) is positioned on a middle portion of the rotating shaft (25), the first rotating member (23) is configured to rotate the metallic member (300) along the second direction, the second rotating member (27) is configured to rotate the metallic member (300) along the third direction to cooperative with the lathe tool (49) and the scraping cutter (59);
(2) positioning a metallic member (300) on the worktable (20), the metallic member (300) comprising a top portion (301) and a peripheral sidewall (303) extending from a peripheral edge of the top portion (301), the peripheral sidewall (303) comprising a plurality of side surfaces arranged in order and adjacent two of the plurality of side surfaces is connected by a corner, and an end edge (305) away from the top portion (301);
(3) moving the lathe tool (49) by the moving device (30) to resist the top portion (301) of the metallic member (300);
(4) applying the worktable (20) to rotate with the metallic member (300) along a first axis along an axis parallel to the third direction;
(5) controlling the lathe tool (49) to move backwards and forwards at a high frequency toward the metallic member (300) to machine curved surfaces of the top portion (301) of the metallic member (300) circumferentially;
(6) moving the lathe tool (49) by the moving device (30) along a predetermined path relative to the worktable (20) to machine curved surfaces of the top portion (301) of the metallic member (300);
(7) holding the metallic member (300) to stop rotate, and moving the lathe tool (49) away from the metallic member (300);
(8) driving the scraping cutter (59) by the moving device (30) to contact the peripheral sidewall of the metallic member (300); and
(9) moving the scraping cutter (59) along a predetermined path to scrap the peripheral sidewall of the metallic member (300), simultaneously controlling a feed of the scraping cutter (59) relative to the metallic member (300), when the scraping cutter (59) finishes scraping one side surface, the scraping cutter (59) arrives at one corner of the peripheral sidewall (303), the moving device (30) drives the scraping feeding mechanism (50) to move along the first direction and the second direction to adjust a position of the scraping cutter (59) relative to the metallic member (300), the second rotating member (27) rotates the metallic member (300) along the third direction until one adjacent side surface of the peripheral sidewall (303) is rotated adjacent to the scraping cutter (59).

2. The method of any of claims 1, wherein the machining method further comprises a step (10), the step (10) comprises applying the worktable to rotate the metallic member along the first axis and a second axis parallel to the second direction to enable the end edge of the peripheral sidewall to face the scraping cutter, and chamfering the end edge by the scraping cutter along a predetermined path, simultaneously controlling a feed of the scraping cutter relative to the metallic member.

3. The method of claim 2, wherein the step (10) further comprises: rotating the metallic member by the worktable along the second axis upward; chamfering the end edge along the end edge; when the scraping cutter arriving at the corner, driving the scraping cutter by the moving device to adjust a feed direction of the scraping cutter, and rotating the scraping cutter by rotatable driving members to enable the scraping cutter to scrap the corner along the tangent line of the outer surface of the corner; the scraping cutter stopping working and moving the scraping cutter by the moving device away from the metallic member; rotating the metallic member by the worktable along first axis and second axis for a certain angle, moving the scraping cutter by the moving device to resist the metallic member and chamfering the end edge; the scraping cutter chamfering the end edges on the side surfaces one by one, thereby accomplishing chamfering the metallic member.

4. The method of claim 3, wherein the worktable the worktable is capable of rotating along multi-axis, in the step (10), the worktable rotates the metallic member along multi-axis, the moving device moves the scraping cutter simultaneously to enable the scraping cutter to contact and scrap the end edge all the time.

5. The method of any of claims 1 to 4, wherein in the step (9), the worktable remains still, the scraping cutter moves along a predetermined path to scrap the peripheral sidewall of the metallic member.

6. The method of any of claims 1 to 5, wherein in the step (9), the worktable rotates the metallic member along the first axis to match with the scraping of the scraping cutter.

7. The method of any of claims 1 to 6, wherein in the step (8), when the scraping feeding mechanism arrives at the peripheral sidewall, the scraping feeding mechanism drives the scraping cutter to slide along the third direction to enable the scraping cutter to arrives at a particular position of the peripheral sidewall.

8. The method of claims any of claims 1 to 7, wherein the lathe feeding mechanism further comprises a sliding saddle and mounting seat fittingly assembled to the sliding saddle, the sliding saddle is slidably connected to the moving device along the second direction, the feeding assembly is received in the mounting seat, and the lathe tool is slidably mounted on the mounting seat, the scraping feeding mechanism is slidably mounted on the sliding saddle along the third direction and the scraping feeding mechanism is adjacent to the mounting seat.

9. The method of claim 8, wherein the scraping feeding mechanism further comprises a linear driving assembly and a linking board, the linear driving assembly comprises a driving member, a screw leading rod, and a nut, the driving member is mounted on the sliding saddle, the sliding saddle comprises a mounting block, the screw leading rod rotatably interconnects the driving member and the mounting block, the nut is sleeved on and engages with the screw leading rod, the linking board is fixed to the nut and slidably engages with the sliding saddle, the rotatable driving member is mounted on the linking board.

## Patentansprüche

1. Bearbeitungsverfahren zum Bearbeiten eines metallischen Elements (300) mittels Drehen und Schaben, umfassend:
(1) Bereitstellen einer Maschine (100) mit einer Maschinenhalterung (10), einem Arbeitstisch (20), einer Bewegungsvorrichtung (30), einem Dreh-Vorschubmechanismus (40) und einem Schabe-Vorschubmechanismus (50), wobei der Arbeitstisch (20) auf der Maschinenhalterung (10) positioniert ist; die Bewegungsvorrichtung (30) verschiebbar an der Maschinenhalterung (10) entlang einer ersten Richtung und über dem Arbeitstisch (20) angebracht ist, der Dreh-Vorschubmechanismus (40) und der Schabe-Vorschubmechanismus (50) verschiebbar an der Bewegungsvorrichtung (30) entlang einer zweiten Richtung senkrecht zu der ersten Richtung angebracht sind, der Dreh-Vorschubmechanismus (40) mindestens eine Vorschubanordnung (47) und ein Drehwerkzeug (49) umfasst, das mit der mindestens einen Vorschubanordnung (47) verbunden ist, wobei die mindestens eine Vorschubanordnung (47) so konfiguriert ist, dass sie das Drehwerkzeug (49) so antreibt, dass es sich entlang einer dritten Richtung im Wesentlichen senkrecht zu der ersten und zweiten Richtung hin und her bewegt, der Schabe-Vorschubmechanismus (50) eine Schabeschneide (59) umfasst und so konfiguriert ist, dass er die Schabeschneide (59) so antreibt, dass sie sich entlang der dritten Richtung bewegt, wobei der Arbeitstisch (20) ein erstes Drehelement (23), eine Drehwelle (25) und ein zweites Drehelement (27) umfasst, wobei das zweite Drehelement (27) auf einem mittleren Abschnitt der Drehwelle (25) positioniert ist, das erste Drehelement (23) so konfiguriert ist, dass es das metallische Element (300) entlang der zweiten Richtung dreht, das zweite Drehelement (27) so konfiguriert ist, dass es das metallische Element (300) entlang der dritten Richtung dreht, um mit dem Drehwerkzeug (49) und der Schabeschneide (59) zusammenzuwirken;
(2) Positionieren eines metallischen Elements (300) auf dem Arbeitstisch (20), wobei das metallische Element (300) einen oberen Abschnitt (301) und eine periphere Seitenwand (303) umfasst, die sich von einer peripheren Kante des oberen Abschnitts (301) erstreckt, wobei die periphere Seitenwand (303) mehrere Seitenflächen umfasst, die in Reihenfolge angeordnet sind, und sie neben zwei benachbarten der mehreren Seitenflächen durch eine Ecke verbunden ist, und eine Endkante (305) weg von dem oberen Abschnitt (301) umfasst;
(3) Bewegen des Drehwerkzeugs (49) durch die Bewegungsvorrichtung (30), um dem oberen Abschnitt (301) des metallischen Elements (300) standzuhalten;
(4) Anwenden des Arbeitstisches (20), um sich mit dem metallischen Element (300) entlang einer ersten Achse entlang einer Achse parallel zur dritten Richtung zu drehen;
(5) Steuern des Drehwerkzeugs (49), um sich mit einer hohen Frequenz in Richtung des metallischen Elements (300) hin und her zu bewegen, um gekrümmte Oberflächen des oberen Abschnitts (301) des metallischen Elements (300) in Umfangsrichtung zu bearbeiten;
(6) Bewegen des Drehwerkzeugs (49) durch die Bewegungsvorrichtung (30) entlang eines vorbestimmten Weges relativ zum Arbeitstisch (20), um gekrümmte Oberflächen des oberen Abschnitts (301) des metallischen Elements (300) zu bearbeiten;
(7) Halten des metallischen Elements (300), um das Drehen anzuhalten, und Bewegen des Drehwerkzeugs (49) weg von dem metallischen Element (300);
(8) Antreiben der Schabeschneide (59) durch die Bewegungsvorrichtung (30), um die periphere Seitenwand des metallischen Elements (300) zu berühren; und
(9) Bewegen der Schabeschneide (59) entlang eines vorbestimmten Weges, um die periphere Seitenwand des metallischen Elements (300) zu schaben, wobei gleichzeitig ein Vorschub der Schabeschneide (59) relativ zu dem metallischen Element (300) gesteuert wird, bei Beenden des Schabens einer Seitenfläche durch die Schabeschneide (59), Ankommen der Schabeschneide (59) an einer Ecke der peripheren Seitenwand (303), Antreiben des Schabe-Vorschubmechanismus (50) durch die Bewegungsvorrichtung (30), damit sich diese entlang der ersten Richtung und der zweiten Richtung bewegt, um eine Position der Schabeschneide (59) relativ zu dem metallischen Element (300) einzustellen, Drehen des metallischen Elements (300) durch das zweite Drehelement (27) entlang der dritten Richtung, bis eine benachbarte Seitenfläche der peripheren Seitenwand (303) neben der Schabeschneide (59) gedreht wird.

2. Verfahren nach einem der Ansprüche 1, wobei das Bearbeitungsverfahren ferner einen Schritt (10) umfasst, wobei der Schritt (10) das Anwenden des Arbeitstisches, um das metallische Element entlang der ersten Achse und einer zweiten Achse parallel zu der zweiten Richtung zu drehen, um zu ermöglichen, dass die Endkante der peripheren Seitenwand der Schabeschneide zugewandt ist, und das Anfasen der Endkante durch die Schabeschneide entlang eines vorbestimmten Weges umfasst, wobei gleichzeitig ein Vorschub der Schabeschneide relativ zu dem metallischen Element gesteuert wird.

3. Verfahren nach Anspruch 2, wobei der Schritt (10) weiter umfasst:
Drehen des metallischen Elements durch den Arbeitstisch entlang der zweiten Achse nach oben;
Anfasen der Endkante entlang der Endkante;
wenn die Schabeschneide an der Ecke ankommt, Antreiben der Schabeschneide durch die Bewegungsvorrichtung, um eine Vorschubrichtung der Schabeschneide einzustellen, und Drehen der Schabeschneide durch drehbare Antriebselemente, um es der Schabeschneide zu ermöglichen, die Ecke entlang der Tangentenlinie der Außenfläche der Ecke zu schaben;
Anhalten des Arbeitens der Schabeschneide und Wegbewegen der Schabeschneide von dem metallischen Element durch die Bewegungsvorrichtung;
Drehen des metallischen Elements durch den Arbeitstisch entlang einer ersten Achse und einer zweiten Achse um einen bestimmten Winkel, Bewegen der Schabeschneide durch die Bewegungsvorrichtung, um dem metallischen Element standzuhalten, und Anfasen der Endkante;
wobei die Schabeschneide die Endkanten an den Seitenflächen eine nach der anderen anfast, wodurch das Anfasen des metallischen Elements erreicht wird.

4. Verfahren nach Anspruch 3, wobei der Arbeitstisch entlang einer Mehrachse drehen kann, der Arbeitstisch in Schritt (10) das metallische Element entlang einer Mehrachse dreht, die Bewegungsvorrichtung die Schabeschneide gleichzeitig bewegt, um es der Schabeschneide zu ermöglichen, die Endkante die ganze Zeit zu berühren und abzuschaben.

5. Verfahren nach einem der Ansprüche 1 bis 4, wobei während der Arbeitstisch in Schritt (9) stillsteht, die Schabeschneide sich entlang eines vorbestimmten Weges bewegt, um die periphere Seitenwand des metallischen Elements zu schaben.

6. Verfahren nach einem der Ansprüche 1 bis 5, wobei der Arbeitstisch in Schritt (9) das metallische Element entlang der ersten Achse dreht, um mit dem Schaben der Schabeschneide übereinzustimmen.

7. Verfahren nach einem der Ansprüche 1 bis 6, wobei in Schritt (8), wenn der Schabe-Vorschubmechanismus an der peripheren Seitenwand ankommt, der Schabe-Vorschubmechanismus die Schabeschneide so antreibt, dass sie entlang der dritten Richtung gleitet, damit die Schabeschneide an einer bestimmten Position der peripheren Seitenwand ankommen kann.

8. Verfahren nach einem der Ansprüche 1 bis 7, wobei der Dreh-Vorschubmechanismus ferner einen Gleitsattel und einen Montagesitz umfasst, der passend auf dem Gleitsattel angebracht ist, der Gleitsattel gleitend mit der Bewegungsvorrichtung entlang der zweiten Richtung verbunden ist, die Vorschubanordnung in dem Montagesitz aufgenommen wird und das Drehwerkzeug gleitend auf dem Montagesitz montiert ist, der Schabe-Vorschubmechanismus gleitend auf dem Gleitsattel entlang der dritten Richtung montiert ist und der Schabe-Vorschubmechanismus sich neben dem Montagesitz befindet.

9. Verfahren nach Anspruch 8, wobei der Schabe-Vorschubmechanismus ferner eine lineare Antriebsanordnung und ein Verbindungsbrett umfasst, die lineare Antriebsanordnung ein Antriebselement, eine Gewindestange und eine Mutter umfasst, das Antriebselement auf dem Gleitsattel montiert ist, der Gleitsattel einen Montageblock umfasst, die Gewindestange das Antriebselement und den Montageblock drehbar miteinander koppelt, die Mutter auf die Gewindestange aufgeschoben ist und mit dieser in Eingriff steht, das Verbindungsbrett an der Mutter befestigt ist und gleitend mit dem Gleitsattel in Eingriff steht, das drehbare Antriebselement auf dem Verbindungsbrett montiert ist.

## Revendications

1. Procédé d'usinage pour usiner un élément métallique (300) par tournage et grattage, comprenant :
(1) la fourniture d'une machine (100) comprenant un support de machine (10), une table de travail (20), un dispositif de déplacement (30), un mécanisme d'alimentation de tour (40) et un mécanisme d'alimentation de grattage (50), la table de travail (20) étant positionnée sur le support de machine (10) ; le dispositif de déplacement (30) étant assemblé de manière coulissante au support de machine (10) le long d'une première direction et situé au-dessus de la table de travail (20), le mécanisme d'alimentation de tour (40) et le mécanisme d'alimentation de grattage (50) étant assemblés de manière coulissante au dispositif de déplacement (30) le long d'une deuxième direction perpendiculaire à la première direction, le mécanisme d'alimentation de tour (40) comprenant au moins un ensemble d'alimentation (47) et un outil de tour (49) relié à l'au moins un ensemble d'alimentation (47), l'au moins un ensemble d'alimentation (47) étant conçu pour entraîner l'outil de tour (49) pour se déplacer le long d'une troisième direction sensiblement perpendiculaire aux première et deuxième directions réciproquement, le mécanisme d'alimentation de grattage (50) comprenant un couteau de grattage (59) et étant conçu pour entraîner le couteau de grattage (59) pour se déplacer le long de la troisième direction, la table de travail (20) comprenant un premier élément rotatif (23), un arbre rotatif (25) et un second élément rotatif (27), le second élément rotatif (27) étant positionné sur une partie médiane de l'arbre rotatif (25), le premier élément rotatif (23) étant conçu pour faire tourner l'élément métallique (300) le long de la deuxième direction, le second élément rotatif (27) étant conçu pour faire tourner l'élément métallique (300) le long de la troisième direction pour coopérer avec l'outil de tour (49) et le couteau de grattage (59) ;
(2) le positionnement d'un élément métallique (300) sur la table de travail (20), l'élément métallique (300) comprenant une partie supérieure (301) et une paroi latérale périphérique (303) s'étendant depuis un bord périphérique de la partie supérieure (301), la paroi latérale périphérique (303) comprenant une pluralité de surfaces latérales agencées dans l'ordre et deux surfaces latérales adjacentes de la pluralité de surfaces latérales sont reliées par un coin, et un bord d'extrémité (305) éloigné de la partie supérieure (301) ;
(3) le déplacement de l'outil de tour (49) par le dispositif de déplacement (30) pour résister à la partie supérieure (301) de l'élément métallique (300) ;
(4) l'application de la table de travail (20) pour effectuer une rotation avec l'élément métallique (300) le long d'un premier axe le long d'un axe parallèle à la troisième direction ;
(5) la commande de l'outil de tour (49) pour se déplacer vers l'arrière et vers l'avant à une fréquence élevée vers l'élément métallique (300) pour usiner les surfaces incurvées de la partie supérieure (301) de l'élément métallique (300) circonférentiellement ;
(6) le déplacement de l'outil de tour (49) par le dispositif de déplacement (30) le long d'un trajet prédéterminé par rapport à la table de travail (20) pour usiner les surfaces incurvées de la partie supérieure (301) de l'élément métallique (300) ;
(7) le maintien de l'élément métallique (300) pour arrêter la rotation, et l'éloignement de l'outil de tour (49) de l'élément métallique (300) ;
(8) l'entraînement du couteau de grattage (59) par le dispositif de déplacement (30) pour entrer en contact avec la paroi latérale périphérique de l'élément métallique (300) ; et
(9) le déplacement du couteau de grattage (59) le long d'un trajet prédéterminé pour gratter la paroi latérale périphérique de l'élément métallique (300), la commande simultanée d'une alimentation du couteau de grattage (59) par rapport à l'élément métallique (300), lorsque le couteau de grattage (59) finit de gratter une surface latérale, le couteau de grattage (59) arrive au niveau d'un coin de la paroi latérale périphérique (303), le dispositif de déplacement (30) entraîne le mécanisme d'alimentation de grattage (50) pour se déplacer le long de la première direction et de la deuxième direction pour régler une position du couteau de grattage (59) par rapport à l'élément métallique (300),
le second élément rotatif (27) met en rotation l'élément métallique (300) le long de la troisième direction jusqu'à ce qu'une surface latérale adjacente de la paroi latérale périphérique (303) soit tournée adjacente au couteau de grattage (59).

2. Procédé selon la revendication 1, dans lequel le procédé d'usinage comprend en outre une étape (10), l'étape (10) comprend l'application de la table de travail pour faire tourner l'élément métallique le long du premier axe et d'un second axe parallèle à la deuxième direction pour permettre au bord d'extrémité de la paroi latérale périphérique de faire face au couteau de grattage, et le chanfreinage du bord d'extrémité par le couteau de grattage le long d'un trajet prédéterminé, la commande simultanée d'une alimentation du couteau de grattage par rapport à l'élément métallique.

3. Procédé selon la revendication 2, dans lequel l'étape (10) comprend en outre: la rotation de l'élément métallique par la table de travail le long du second axe vers le haut ; le chanfreinage du bord d'extrémité le long du bord d'extrémité ; lorsque le couteau de grattage arrive au niveau du coin, l'entraînement du couteau de grattage par le dispositif de déplacement pour régler une direction d'alimentation du couteau de grattage, et la rotation du couteau de grattage par des éléments d'entraînement rotatifs pour permettre au couteau de grattage de gratter le coin le long de la ligne tangente de la surface extérieure du coin ; l'arrêt du fonctionnement du couteau de grattage et l'éloignement du couteau de grattage de l'élément métallique par le dispositif de déplacement ; la rotation de l'élément métallique par la table de travail le long du premier axe et du second axe pour un certain angle, le déplacement du couteau de grattage par le dispositif de déplacement pour résister à l'élément métallique et le chanfreinage du bord d'extrémité ; le chanfreinage, par le couteau de grattage, des bords d'extrémité sur les surfaces latérales un par un, accomplissant ainsi le chanfreinage de l'élément métallique.

4. Procédé selon la revendication 3, dans lequel la table de travail peut effectuer une rotation le long de plusieurs axes, à l'étape (10), la table de travail met en rotation l'élément métallique le long de plusieurs axes, le dispositif de déplacement déplace le couteau de grattage simultanément pour permettre au couteau de grattage d'entrer en contact et de gratter le bord d'extrémité en permanence.

5. Procédé selon l'une quelconque des revendications 1 à 4, dans lequel, à l'étape (9), la table de travail reste immobile, le couteau de grattage se déplace le long d'un trajet prédéterminé pour gratter la paroi latérale périphérique de l'élément métallique.

6. Procédé selon l'une quelconque des revendications 1 à 5, dans lequel, à l'étape (9), la table de travail met en rotation l'élément métallique le long du premier axe pour correspondre au grattage du couteau de grattage.

7. Procédé selon l'une quelconque des revendications 1 à 6, dans lequel, à l'étape (8), lorsque le mécanisme d'alimentation de grattage arrive au niveau de la paroi latérale périphérique, le mécanisme d'alimentation de grattage entraîne le glissement du couteau de grattage le long de la troisième direction pour permettre au couteau de grattage d'arriver au niveau d'une position particulière de la paroi latérale périphérique.

8. Procédé selon l'une quelconque des revendications 1 à 7, dans lequel le mécanisme d'alimentation de tour comprend en outre une selle coulissante et un siège de montage assemblés de manière ajustée à la selle coulissante, la selle coulissante est reliée de manière coulissante au dispositif de déplacement le long de la deuxième direction, l'ensemble d'alimentation est reçu dans le siège de montage, et l'outil de tour est monté de manière coulissante sur le siège de montage, le mécanisme d'alimentation de grattage est monté de manière coulissante sur la selle coulissante le long de la troisième direction et le mécanisme d'alimentation de grattage est adjacent au siège de montage.

9. Procédé selon la revendication 8, dans lequel le mécanisme d'alimentation de grattage comprend en outre un ensemble d'entraînement linéaire et une planche de liaison, l'ensemble d'entraînement linéaire comprend un élément d'entraînement, une tige de guidage de vis, et un écrou, l'élément d'entraînement est monté sur la selle coulissante, la selle coulissante comprend un bloc de montage, la tige de guidage de vis lie en rotation l'élément d'entraînement et le bloc de montage, l'écrou est manchonné sur et vient en prise avec la tige de guidage de vis, la planche de liaison est fixée à l'écrou et mise en prise de manière coulissante avec la selle coulissante, l'élément d'entraînement rotatif est monté sur la planche de liaison.
